# EUROPEAN PATENT SPECIFICATION

(11) **EP 2 234 450 B1**
(45) Date of publication and mention of the grant of the patent: **15.05.2013**
(21) Application number: 10003010.5
(22) Date of filing: 22.03.2010
(51) Int. Cl.: H04W 24/00

(54) **Method of handling radio link failure in a wireless communication system and related communication device**
Verfahren zur Behandlung von Funkverbindungsfehlern in einem drahtlosen Kommunikationssystem und entsprechende Kommunikationsvorrichtung
Procédé de manipulation d'échec de lien radio dans un système de communication sans fil et dispositif de communication associé

(30) Priority: 22.03.2009 US 162328 P; 21.01.2010 US 690930; 21.03.2010 US 728270
(43) Date of publication of application: 29.09.2010
(73) Proprietor: HTC Corporation, Taoyuan County 330 (TW)
(72) Inventor: Wu, Chih-Hsiang, Taoyuan City Taoyuan County 33 (TW)
(74) Representative: Wagner, Karl H.

(56) References cited:
- EP-A2- 1 903 824
- WO-A2-2008/087524
- HUAWEI: "RAN2 considerations for coordinated multipoint transmission and reception", 3GPP DRAFT; R2-092178 RAN2 CONSIDERATIONS FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050340008, [retrieved on 2009-03-17]
- NOKIA: "UE behaviour in RRC Connection Re-establishment scenarios", 3RD GENERATION PARTNERSHIP PROJECT (3GPP); TECHNICALSPECIFICATION GROUP (TSG) RADIO ACCESS NETWORK (RAN); WORKINGGROUP 2 (WG2); 20060508 XX, XX, [Online] vol. R2-061188 , pages 1-20, XP002488903, Retrieved from the Internet: URL:http://www.3gpp1.net/ftp/tsg_ran/WG2_R L2/TSGR2_53/Documents/R2-061188.zi> [retrieved on 2006-05-08]
- "3rd Generation Partnership Project; Technical Specification Group Radio Access Network; Evolved Universal Terrestrial Radio Access (E-UTRA) Radio Resource Control (RRC); Protocol specification (Release 8)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.0, 1 March 2009 (2009-03-01), pages 1-193, XP050377648,
- INTERDIGITAL: "RLF Procedures for Carrier Aggregation", 3GPP DRAFT; R2-094218, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352487, [retrieved on 2009-08-18]
- LG ELECTRONICS INC: "Radio Link Failure considering carrier aggregation", 3GPP DRAFT; R2-093856 RADIO LINK FAILURE FOR CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352063, [retrieved on 2009-06-23]
- "Text Proposal to TS 36.331 about RLF procedure", 3GPP DRAFT; R2-074393_TP_FOR_36.331_ABOUT_RLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071002, 2 October 2007 (2007-10-02), XP050136962, [retrieved on 2007-10-02]

## Description

The present invention relates to a method and apparatus for handling radio link failure in a wireless communication system.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, so that the system structure becomes simple.

In the LTE system, radio link failure (RLF) between a user equipment (UE) and a UTRAN (Universal Terrestrial Radio Access Network) occurs due to all kinds of signal impairments in a wireless environment, unfavorable signal propagation conditions, or even system malfunctions. Therefore, the UE configured with a component carrier or connected to a cell defines a certain timer for RLF detection. For example, when the UE detects a radio problem on a component carrier or on a cell, a timer will be started for detecting radio link failure of the component carrier or the cell, and when the timer expires, the UE considers that the radio link of the component carrier or the cell have failed. That is, the timer is used for determining whether radio link of the component carrier or the cell is failed when the radio problem occurs.

Toward advanced high-speed wireless communication system, such as transmitting data in a higher peak data rate, LTE-Advanced is standardized by the 3rd Generation Partnership Project (3GPP) as an enhancement of LTE system. LTE-Advanced targets faster switching between power states, improves performance at the cell edge, and includes subjects, such as bandwidth extension, coordinated multipoint transmission/reception (COMP), multiple input multiple output (MIMO), etc.

For bandwidth extension, carrier aggregation is introduced to the LTE-Advanced for extension to wider bandwidth, where two or more component carriers are aggregated, for supporting wider transmission bandwidths e.g. up to 100MHz and for spectrum aggregation. According to carrier aggregation capability, multiple component carriers are aggregated into overall wider bandwidth, wherein UE can establish multiple links corresponding to the multiple component carriers for simultaneously receiving and/or transmitting on each component carrier.

In addition, COMP is considered for LTE-Advanced as a tool to improve coverage of high data rates, cell edge throughput, and system efficiency, which implies dynamic coordination among multiple geographically separated points. That is, when an UE is in a cell-edge region, it is able to receive signal from multiple cells and transmission of the UE can be received at the multiple cells.

According to structure of the LTE system, each UE is only allowed to connect to a single cell with a single component carrier. When a radio problem is detected on the single component carrier or the single cell, the UE starts a timer for RLF detection only on the single component carrier or the single cell. However, according to structure of the LTE Advanced system, the UE operates with carrier aggregation, COMP or both, and connects to multiple cells with same component carrier or with multiple component carriers. The LTE Advanced system does not clearly specify how the RLF detection is applied for the UE with multiple component carriers or multiple cells. Therefore, usage of timer for the RLF detection in the multiple component carriers or multiple cells is never concerned. Improper timer initiation in multiple component carriers or multiple cells may cause abnormal connection malfunction of the UE.

Moreover, in the LTE-Advanced system, radio link failure may occur on any of the component carriers of the UE, which may need to notify the network so that the network can handle or help the UE to deal with the radio link failure. Thus, how to transfer information of radio link failure associated with multiple component carriers is a topic for discussion.

EP 1 903 824 A2 discloses a method for detecting radio link failure in wireless communications system and related apparatus to provide services having different QoS requirements with different timers or parameters for detecting radio link failure in a wireless communications system, detecting the radio link failure includes utilizing at least one timer of a packet switching domain of a communications device to detect the radio link failure, and utilizing at least one parameter of the packet switching domain of the communications device.

HUAWEI: "RAN2 considerations for coordinated multipoint transmission and reception"; 3GPP Draft, R2-092178, 17 March 2009, XP 050340008 discloses maintenance of CoMP sets. Active CoMP set is expected to be dynamically selected from candidate CoMP set based on physical measurement results (e.g. CQI, PMI, CSI, etc). To simplify the dynamical active CoMP set selection, the selection can be limited in a semi-static cell set defined as candidate CoMP set. Entering and leaving the candidate CoMP set is based on the high layer measurement result which is measured by UE or eNB. Within candidate CoMP set, cells may have different Tx power class and a different interference condition. The DL candidate CoMP cells cannot be suitable for UL coordinated reception. Thus it is assumed that there is a need to maintain Candidate CoMP cells for DL and UL separately. If the new cell enters the candidate CoMP set, network should indicate the UE to measure and report the physical measurement result (e.g. CQI, PMI) for selecting suitable active CoMP set to coordinated transmission, also at least the physical layer configuration of the new candidate CoMP cell can be modified to UE for receiving the PDSCH in this cell. The related deletion or modification of radio resource configuration is needed when candidate CoMP cell leaves this set.

This in mind, the present invention aims at providing a method and apparatus for handling radio link failure related to multiple component carriers/cells in a wireless communication system, so as to reduce a signaling quantity, maintain connection efficiency, or obtain flexibility of radio link failure management.

This is achieved by a method and a communication device for handling radio link failure for a wireless communication system according to claims 1 and 16, respectively. The dependent claims pertain to corresponding further developments and improvements.

As will be seen more clearly from the detailed description following below, the claimed method for handling radio link failure for a wireless communication system comprises performing radio problem detection for a plurality of targets of interest, and starting a timer for detecting radio link failure of the plurality of targets of interest when radio problems are detected on the plurality of targets of interest.

In the following, the invention is further illustrated by way of example, taking reference to the accompanying drawings. Thereof
Fig. 1 is a schematic diagram of an exemplary wireless communication system with multiple component carriers,
Fig. 2 is a schematic diagram of an exemplary communication device according to an embodiment,
Fig. 3 is a flowchart of an exemplary process according to a first embodiment,
Fig. 4 is a schematic diagram of an exemplary communication device according to Fig. 3,
Fig. 5 is a flowchart of an exemplary process according to a second embodiment,
Fig. 6 is a schematic diagram of an exemplary communication device according to Fig. 5,
Fig. 7 is a flowchart of an exemplary process according to a third embodiment,
Fig. 8 is a schematic diagram of an exemplary communication device according to Fig. 7,
Fig. 9 is a flowchart of a process according to a fourth embodiment of the present invention, and
Fig. 10 is a flowchart of a process according to Fig. 9.

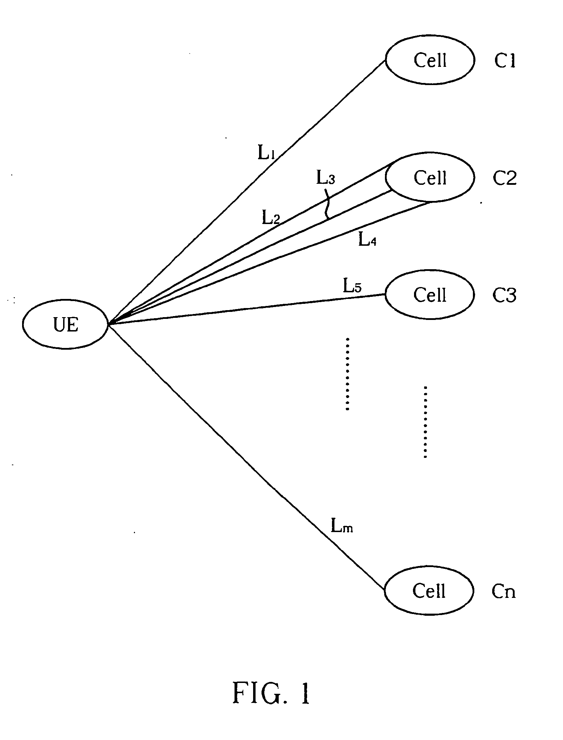

Please refer to Fig. 1, which illustrates a schematic diagram of a wireless communication system featuring multiple connections between a UE and cells C1-Cn in. The UE can operate with carrier aggregation and COMP according to the LTE Advanced system. In Fig. 1, the UE and the cells C1-Cn are communicated through radio links L₁-Lₘ each corresponding to a component carrier configured in the UE, and each supports a LTE radio access technology (RAT) or an E-UTRAN (Evolved Universal Terrestrial Radio Access Network) RAT supporting the function of multiple component carriers on one UE. For example, the UE communicates with the cell C1 through the radio link L₁, communicates with the cell C2 through the radio links L₂-L₄, and so on. The configured component carriers or the cells C1-Cn are defined as targets of interest for the UE because the radio links L₁-Lₘ which the UE connects to are corresponding to the configured component carriers, and to the cells C1-Cn. In other words, the UE considers the cells or the configured components carriers as connecting objects as a result of the radio links L₁-Lₘ.

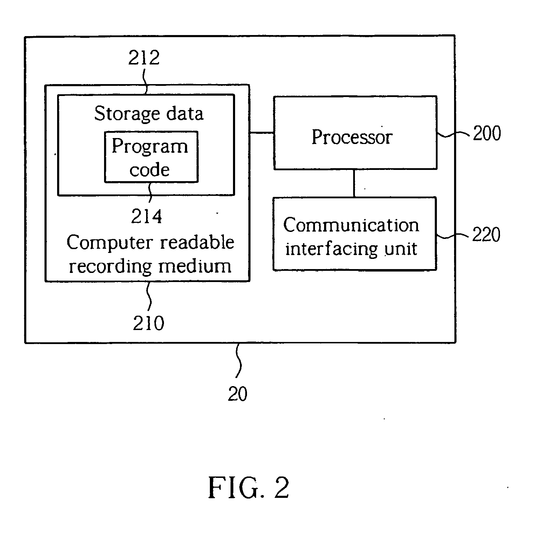

Please refer to Fig. 2, which illustrates a schematic diagram of a communication device 20 according to an embodiment of the present invention. The communication device 20 can be the UE shown in Fig. 1 and includes a processor 200, a computer readable recording medium 210 and a communication interfacing unit 220. The computer readable recording medium 210 is any data storage device that stores storage data 212, including program code 214, thereafter read and processed by the processor 200. Examples of the computer readable recording medium 210 include a subscriber identity module (SIM), read-only memory (ROM), random-access memory (RAM), CD-ROMs, magnetic tapes, hard disks, optical data storage devices, and carrier waves (such as data transmission through the Internet). The processor 200 controls the communication interfacing unit 220 and related operations and states of the communication device 20 according to processing results of the processor 200. The communication interfacing unit 220 is preferably a radio transceiver for wirelessly communicating with a network.

The program code 214 includes program code of a physical layer which can perform radio problem detection for multiple targets of interest, and problem code of a radio resource control (RRC) layer which can perform radio link failure detection for the multiple targets of interest. Component carriers or cells can be the targets of interest.

A method for handling radio link failure detection for muliple component carriers/cells can be made mainly under the following concerns: reduction of a signaling quantity, maintenance of connection efficiency, and flexibility of radio link failure management.

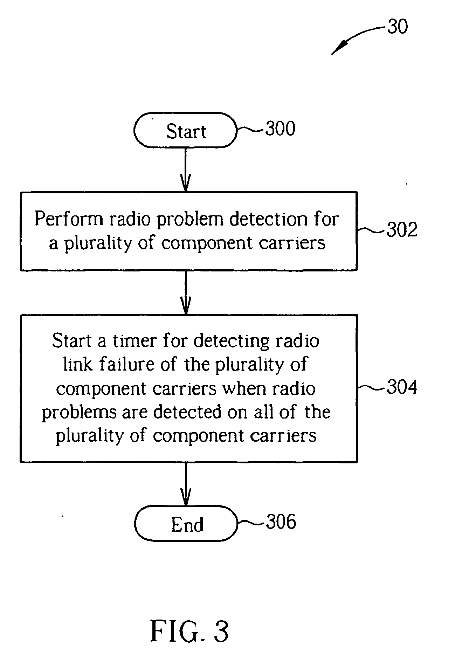

For signaling quantity reduction, please refer to Fig. 3, which illustrates a flowchart of a process 30 according to a first embodiment of the present invention. The process 30 is utilized in an UE for handling radio link failure detection associated with muliple component carriers in a wireless communication system, and targets of interest are component carriers. The process 30 can be compiled into the program code 214 and includes the following steps:
Step 300: Start.
Step 302: Perform radio problem detection for a plurality of component carriers.
Step 304: Start a timer for detecting radio link failure of the plurality of component carriers when radio problems are detected on all of the plurality of component carriers.
Step 306: End.

According to the process 30, the UE jointly starts the timer for determining whether the radio link failure of the plurality of component carriers occurs when the plurality of component carriers all have the radio problems. That is, the UE does not start the timer until all of the plurality of component carriers have the radio problems.

An example for operation of the radio link detection is described as follows. The UE firstly performs radio problem detection for the plurality of component carriers, and when the radio problems are detected on all of the plurality of component carriers by a physical layer of the UE, the physical layer generates a plurality of consecutive out-of-synchronization indications to a RRC layer of the UE. When the RRC layer receives the plurality of consecutive out-of-synchronization indications, the UE starts the timer for detecting the radio link failure (RLF) of all of the plurality of component carriers.

Starting a timer when all of the plurality of component carriers have the radio problems can reduce a signaling quantity between the physical and RRC layers. Take an example associated to Fig. 1. The UE has radio links L₁-Lₘ corresponding to the plurality of component carriers. The physical layer detects radio problems on the radio links L₁-Lₘ₋₁ and does not provide a plurality of out-of-synchronization indications to the RRC layer. When the physical layer further detects a radio problem on the radio link Lm, the physical layer generates the plurality of out-of-synchronization indications to the RRC layer of the UE for timer initiation. As a result, the signaling quantity of the consecutive out-of-synchronization indications can be reduced.

Preferably, the physical layer has to generate a specific number of consecutive out-of-synchronization indications, where the specific number is a number N310.

Please not that, after the UE starts the timer for detecting the RLF of all of the plurality of component carriers, the UE constantly performs radio problem detection for the plurality of component carriers before the timer expires. When the UE synchronizes any one of the plurality of component carriers, the physical layer of the UE considers that the radio problem of the component carriers to be recovered, and generates a plurality of consecutive in-synchronization indications to the RRC layer of the UE. When the RRC layer receives the plurality of consecutive in-synchronization indications, the UE stops the timer to avoid radio link failure.

Preferably, the physical layer has to generate a specific number of consecutive in-synchronization indications, where the specific number is a number N311.

In addition, the UE considers that one of the plurality of component carriers is synchronized, when the UE detects reference signals in any of the component carriers for a predetermined period. For example, before the timer expires, if the UE detects reference signals in the radio link L₁, the radio problem of the radio link L₁ is considered to be recovered. Preferably, the timer is a timer T310 and may be configured by the network via a RRC message (broadcast or dedicated). For example, in Fig. 1, the UE connects to the cells C1-Cn, where the cell C1 is assumed as a main cell and the cells C2-Cn are supplementary cells. Then, the value of the timer is from system information of the cell C1.

However, if the UE does not synchronize any of the plurality of component carriers, which indicates that none of the radio problems is recovered, the UE determines that the radio link failure of the plurality of component carriers occurs, when the timer expires, and initiates a RRC connection re-establishment procedure for re-establishing at least a radio link of the plurality of component carriers when access stratum (AS) security is activated. Note that, the AS security activation indicates usage of data radio bearers. In addition, if the RRC connection re-establishment procedure is successfully performed, the UE stays in the RRC connected mode and is able to use radio resource from the re-established radio links. On the contrary, if the RRC connection re-establishment procedure is failed to recover the loss of a radio link, the UE goes to a RRC idle mode, and releases the radio resource.

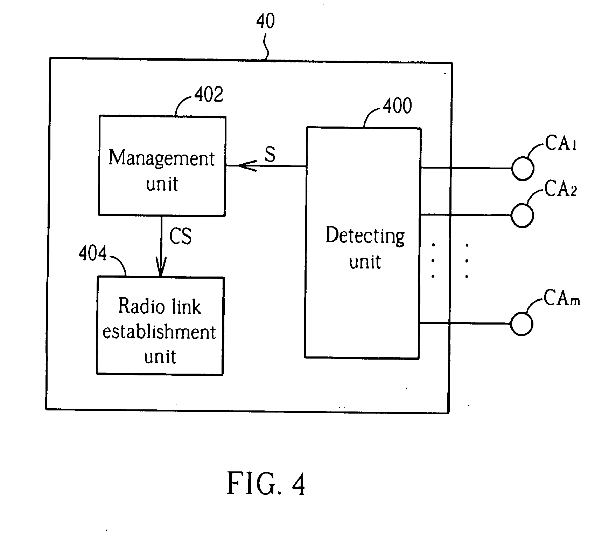

Please refer to Fig. 4 which is a schematic diagram of a communication device 40 according to another embodiment of the present invention. The communication device 40 is used for realizing the process 30 and includes a detecting unit 400, a management unit 402 and a radio link establishment unit 404. The detecting unit 400 is used for performing radio problem detection for component carriers CA1-CAm of the communication device 40, and generating an indication signal S when the radio problems are detected on the component carriers CA1 -CAm. The management unit 402 is used for starting a timer for detecting radio link failure of the component carriers CA1-CAm according to the indication signal S.

Preferable, the indication signal S includes a plurality of consecutive out-of-synchronization indications. The detecting unit 400 may further generate a plurality of consecutive in-synchronization indications when one of the radio problems detected on the component carriers CA1-CAm is recovered. Moreover, the management unit 402 may further stop the timer according to the plurality of consecutive in-synchronization indications. Otherwise, the management unit 402 may determine the radio link failure of the component carriers CA1 -CAm to be detected when the timer expires, and thereby generating a control signal CS. The radio link establishment unit 404 performs a RRC connection re-establishment procedure according to the control signal CS when AS security is activated. The detailed operations of the communication device 40 can be known by referring the aforementioned description, and therefore not detailed herein.

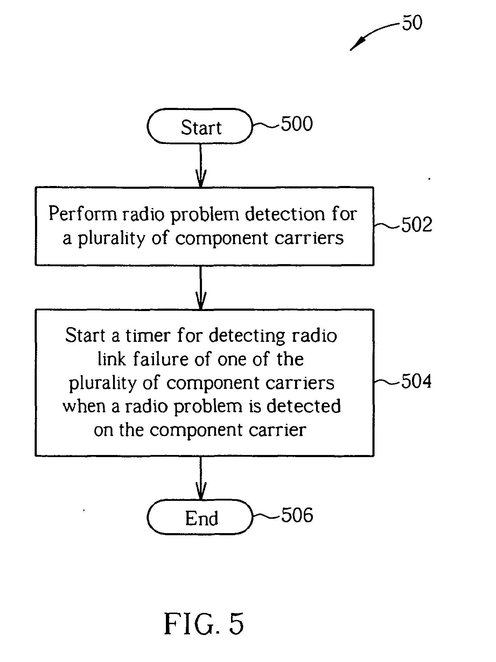

On the other hand, for connection efficiency maintenance of the UE, please refer to Fig. 5 which is a flowchart of a process 50 according to a second embodiment of the present invention. The process 50 is utilized in the UE for handling radio link failure detection associated with muliple component carriers in a wireless communication system, and targets of interest are component carriers. The process 50 can be compiled into the program code 214 and includes the following steps:
Step 500: Start.
Step 502: Perform radio problem detection for a plurality of component carriers.
Step 504: Start a timer for detecting radio link failure of one of the plurality of component carriers when a radio problem is detected on the component carrier.
Step 506: End.

According to the process 50, the UE independently starts the timer for determining whether the radio link failure of the component carrier occurs, when the component carrier has the radio problem. That is, the UE starts timers for the plurality of component carriers when the plurality of component carriers have radio problems. Take an example based on Fig. 1. The UE starts a timer when component carrier corresponding to the radio link L₁ has radio problem, starts another timer when component carrier corresponding to the radio link L₂ has radio problem, and so on.

For operation of the radio link detection, the UE firstly detects radio problem for the plurality of component carriers, and when a radio problem is detected on one of the plurality of component carriers, the physical layer of the UE generates a plurality of consecutive out-of-synchronization indications to the RRC layer of the UE. When the RRC layer of the UE receives the plurality of consecutive out-of-synchronization indications, the UE starts a timer for detecting the radio link failure of the component carrier.

Note that, unlike the operation of the process 30, the physical layer of the UE generates the plurality of consecutive out-of-synchronization indications to the RRC layer of the UE when one of the component carriers has the radio problem. Take an example associated to Fig. 1. The UE has radio links L₁-Lₘ corresponding to the plurality of component carriers. The physical layer detects a radio problem on the radio link L₁, and provides a plurality of out-of-synchronization indications to the RRC layer of the UE for timer initiation.

Preferably, the physical layer generates a specific number of consecutive out-of-synchronization indications, where the specific number is a number N310.

Moreover, after the UE starts the timer for detecting the RLF of the component carrier, the UE constantly performs radio problem detection for the plurality of component carriers before the timer expires. When the UE synchronizes the component carrier, the physical layer of the UE considers that the radio problem of the component carrier to be recovered, and then generates a plurality of consecutive in-synchronization indications to the RRC layer of the UE. When the RRC layer receives the plurality of consecutive in-synchronization indications, the UE stops the timer to avoid radio link failure.

Preferably, the physical layer generates a specific number of consecutive in-synchronization indications, where the specific number is a number N31 1. Likewise, the timer is the timer T310, and the description of the timer can be referred from above, so the detail description is omitted herein.

However, if the UE does not synchronize the component carrier, which indicates the radio problem is not recovered, the UE determines that the radio link failure of the component carrier occurs, when the timer expires, and may send a RRC message indicating the occurrence of the radio link failure of the component carrier to the network. If the UE synchronize the component carrier, the UE may initiate a random access procedure for re-establishing a radio link of the component carrier. If the random access procedure is successfully performed, the UE is able to use radio resource of the radio link. If the random access procedure is failed to recover the loss of the radio link, the UE still stays in the RRC connected mode, but is not able to use radio resource from the loss radio link. When the radio link failure occurs on all component carriers, the UE initiates a RRC connection re-establishment procedure for re-establishing at least a radio link of the component carrier when AS security is activated. If the RRC connection re-establishment procedure is successfully performed, the UE stays in the RRC connected mode and is able to use radio resource from the re-established radio links. On the contrary, if the RRC connection re-establishment procedure is failed to recover the loss of a radio link, the UE goes to a RRC idle mode, and releases the radio resource. In addition, the UE does not enter RRC idle mode unless the radio links of all of the plurality of the component carriers are failed, so as to maintain connection efficiency.

Alternatively, the UE initiates a RRC connection re-establishment procedure for re-establishing a radio link of the component carrier instead of only the random access procedure. If the RRC connection re-establishment procedure is failed to recover the loss of the radio link, the UE still stays in the RRC connected mode, but is not able to use radio resource from the loss radio link.

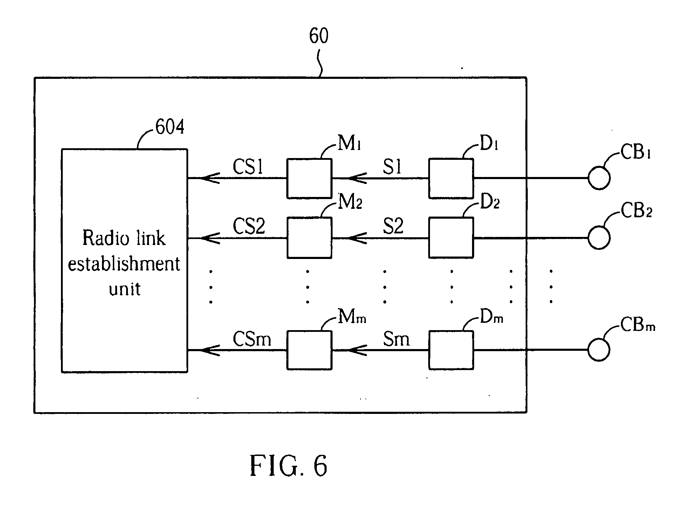

Please refer to Fig. 6 which is a schematic diagram of a communication device 60 according to another embodiment of the present invention. The communication device 60 is used for realizing the process 50, which includes detecting units D1-Dm, management units M1-Mm and a radio link establishment unit 604. The detecting units D1-Dm correspond to the management units M1-Mm, and are used for performing radio problem detection for component carriers CB1 -CBm of the communication device 60 respectively. In addition, any of the detecting units D1-Dm generate indication signals S1-Sm when radio problems are detected on the component carriers CB1-CBm, respectively. The management units M1-Mm correspond to the component carriers CB1-CBm, and are used for managing timers for detecting radio link failure of the component carriers CB1-CBm, wherein any one of the management units M1-Mm corresponding to the component carriers CB1-CBm having the radio problem start timers according to indication signals S1-Sm, respectively. Preferably, the indication signals S1-Sm each can include a plurality of consecutive out-of-synchronization indications.

Take an example for clearly illustrating operations between the detecting units D1-Dm, the management units M1-Mm and the radio link establishment unit 604 of the communication device 60. Assume the detecting unit D1 detects a radio problem on the component carrier CB1. The detecting unit D1 then generates the indication signal S1 to the management unit M1. According to the indication signal S1, the management unit M1 starts a timer for detecting radio link failure of the component carrier CBA1. The detecting unit D1 may further generate a plurality of consecutive in-synchronization indications when the radio problem detected on the component carrier CB1 is recovered. Moreover, the management unit M1 may further stop the timer according to the plurality of consecutive in-synchronization indications. Otherwise, the management unit M1 may determine the radio link failure of the component carrier CB1 to be detected when the timer expires, and generate a control signal CS1 to the radio link establishment unit 604. According to the control signal CS1, the radio link establishment unit 604 performs a RRC connection re-establishment procedure or a random access procedure for re-establishing a radio link of the component carrier CB1 when AS security is activated. Likewise, functions of the detecting units D2-Dm and the management units M2-Mm are similar to functions of the detecting unit D1 and the management unit M1.

The detailed operations of the communication device 60 can be known by referring the aforementioned description, and therefore not detailed herein.

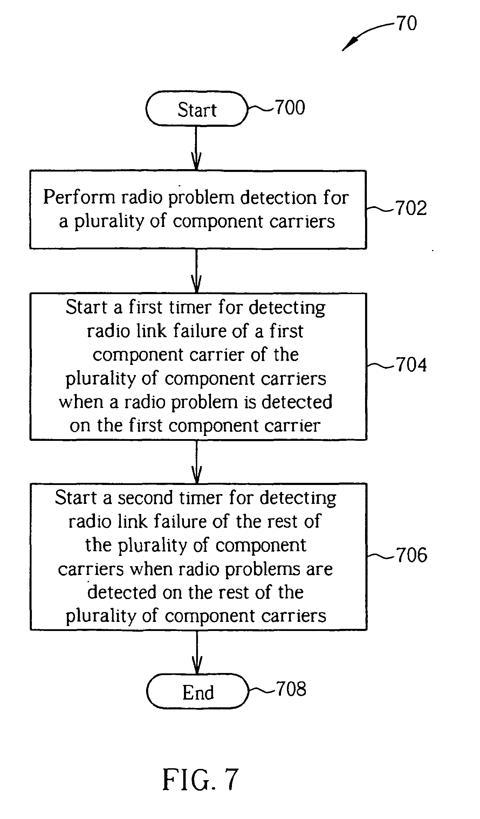

On the other hand, for increasing flexibility of radio link failure management, please refer to Fig. 7 which is a flowchart of a process 70 according to a third embodiment of the present invention. The process 70 is utilized in the UE for handling the radio link failure detection associated with muliple component carriers in a wireless communication system, and targets of interest are component carriers. The process 70 can be compiled into the program code 214 and includes the following steps:
Step 700: Start.
Step 702: Perform radio problem detection for a plurality of component carriers.
Step 704: Start a first timer for detecting radio link failure of a first component carrier of the plurality of component carriers when a radio problem is detected on the first component carrier.
Step 706: Start a second timer for detecting radio link failure of the rest of the plurality of component carriers when radio problems are detected on the rest of the plurality of component carriers.
Step 708: End.

According to the process 70, the first timer and the second timer are separately started for detecting the radio link failure of the first component carrier and the rest of the component carriers when the first component carrier has the radio problem and the rest of the plurality of component carriers have the radio problems. That is, when the radio problem is detected on the first component carrier, the UE starts the first timer for determining whether the radio link failure of the first component carrier occurs, and starts the second timer for determining whether the radio link failure of the rest of component carriers occurs when the radio problems are detected on the rest of the component carriers.

For operation of the radio link detection, the UE firstly performs radio problem detection for the plurality of component carriers. When the radio problem is detected on the first component carrier by the physical layer of the UE, the physical layer generates a first number of consecutive out-of-synchronization indications to the RRC layer of the UE. Similarly, when the radio problems are detected on the rest of the component carriers, the physical layer generates a second number of consecutive out-of-synchronization indications to the RRC layer. The first and second numbers can be configured by the RRC layer. When the RRC layer receives the first number of consecutive out-of-synchronization indications, the UE starts the first timer for detecting the RLF of the first component carrier, and when the RRC layer receives the second number of consecutive out-of-synchronization indications, the UE starts the second timer for detecting the RLF of the rest of the plurality of the component carriers.

Preferably, the first component carrier is a main component carrier or a main cell, and the rest of the plurality of component carriers are supplement component carriers or supplement cells.

Please note that, after the UE starts the first timer for detecting the RLF of the first component carrier, the UE constantly performs radio problem detection for the plurality of component carriers before the first timer expires. When the UE synchronizes the first component carrier, the physical layer of the UE considers that the radio problem of the first component carrier is recovered, and generates a third number of consecutive in-synchronization indications to the RRC layer of the UE. When the RRC layer of the UE receives the third number of consecutive in-synchronization indications, the UE stops the first timer to avoid the radio link failure of the first component carrier. Similarly, before the second timer expires, if the UE synchronizes to the rest of the plurality of component carriers, the UE considers that the radio problems of the rest of the plurality of component carriers is recovered, and the physical layer of the UE generates a fourth number of consecutive in-synchronization indications to the RRC layer. The UE stops the second timer to avoid the radio link failure of the rest of the plurality of component carriers when the fourth number of consecutive in-synchronization indications are received. The third and fourth numbers can be configured by the RRC layer.

However, if the radio problem of the first component carrier is not recovered, the UE determines that the radio link failure of the first component carrier occurs, when the first timer expires, and initiates a RRC connection re-establishment procedure or a random access procedure for re-establishing a radio link of the first component carrier when AS security is activated. If the RRC connection re-establishment procedure or random access procedure is successfully performed, the UE stays in the RRC connected mode and is able to use radio resource from the re-established radio link. On the other hand, if the RRC connection re-establishment procedure or random access procedure is failed to recover the radio link of the first component carrier, the UE still stays in the RRC connected mode but is not able to use radio resource from the first component carrier. In addition, the UE does not go to the RRC idle mode unless the radio links of the rest of the plurality of component carriers are all failed, so as to maintain connection efficiency.

Similarly, if the radio problems of the rest of the plurality of component carriers are not recovered, the UE determines that the radio link failure of the rest of the component carriers occurs, when the second timer expires, and initiates a RRC connection re-establishment procedure or random access procedure for re-establishing at least a radio link of the rest of component carriers when AS security is activated. If the RRC connection re-establishment procedure or random access procedure is successfully performed, the UE stays in the RRC connected mode and is able to use radio resource from the re-established radio links of the rest of the component carriers. On the other hand, if the RRC connection re-establishment procedure or random access procedure is failed to recover the loss of the radio links of the rest of the component carriers, the UE still stays in the RRC connected mode but is not able to use radio resource from the rest of the component carriers. In addition, the UE goes to the RRC idle mode when the radio link of the first component carrier is failed. If the radio link failure of the first and the rest of the component carriers occurs, the UE initiates a RRC connection re-establishment procedure for re-establishing at least a radio link of the component carrier when AS security is activated. If the RRC connection re-establishment procedure is successfully performed, the UE stays in the RRC connected mode and is able to use radio resource from the re-established radio links. On the contrary, if the RRC connection re-establishment procedure is failed to recover the loss of a radio link, the UE goes to a RRC idle mode, and releases the radio resource.

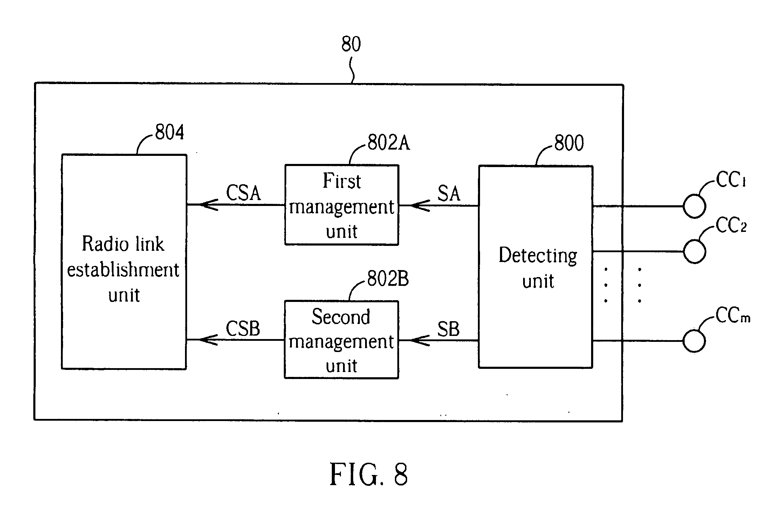

Please refer to Fig. 8, which is a schematic diagram of a communication device 70 according to another embodiment of the present invention. The communication device 80 is used for realizing the process 70, which includes a detecting unit 800, a first management unit 802A, a second management unit 802B and a radio link establishment unit 804. The detecting unit 800 is used for performing radio problem detection for component carriers CC1-CCm, generating a first indication signal SA when a radio problem of the first component carrier CC1 is detected, and generating a second indication signal SB when radio problems of the rest of the component carriers CC2-CCm are detected. The first management unit 802A is used for starting a first timer for detecting radio link failure of the first component carrier CC1 according to the first indication signal SA. The second management unit 802B is used for starting a second timer for detecting radio link failure of the rest of the component carriers CC2-CCm according to the second indication signal SB.

Preferably, the first indication signal SA includes a first number of consecutive out-of-synchronization indications, and the second indication signal SB includes a second number of consecutive out-of-synchronization indications. The detecting unit 800 may further generate a third number of consecutive in-synchronization indications when the radio problem detected on the first component carrier CC1 is recovered, and generating a fourth number of consecutive in-synchronization indications when one of the radio problems detected on the rest of the component carriers CC2-CCm is recovered. The first to fourth numbers all can be configured by the RRC layer. Moreover, the first management unit 802A may further stop the first timer according to the third number of consecutive in-synchronization indications. Otherwise, the first management unit 802A may determine the radio link failure of the first component carrier CC1 to be detected, when the first timer expires, and generating a first control signal CSA. Similarly, the second management unit 802B may further stop the second timer according to the fourth number of consecutive in-synchronization indications. Otherwise, the second management unit 802B may determine the radio link failure of the rest of the component carriers CC2-CCm to be detected when the second timer expires, and generating a second control signal CSB. The radio link establishment unit 804 performs a RRC connection re-establishment procedure or a random access procedure according to the first control signal CSA the second control signal CSB when AS security is activated. The detailed operations of the communication device 80 can be known by referring the aforementioned description, and therefore not detailed herein.

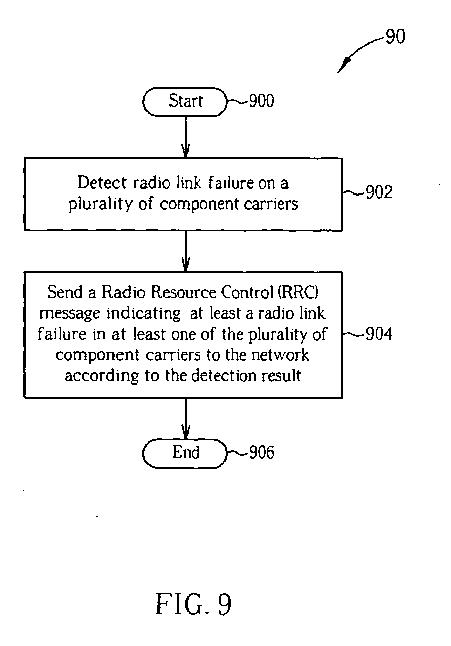

In addition, a method for handling radio link failure problem is provided. Please refer to Fig. 9 which is a flowchart of a process 90 according to an example. The process 90 is utilized in the UE for handling radio link failure associated with multiple targets of interest in a wireless communication system, and the targets of interest are component carriers. The process 90 can be compiled into the program code 214 and includes the following steps:
Step 900: Start.
Step 902: Detect radio link failure on a plurality of component carriers.
Step 904: Send a Radio Resource Control (RRC) message indicating at least a radio link failure in at least one of the plurality of component carriers to the network according to the detection result.
Step 906: End.

According to the process 90, when radio link failure is detected on at least one of the plurality of component carriers, the UE sends the RRC message indicating occurrence of radio link failure of the component carriers to the network. In addition, the RRC message is sent on one of the plurality of component carriers excluding the component carriers having radio link failure.

Take an example based on the concept of the process 90. If a UE has two component carriers, and has detected radio link failure occurs in a first component carrier, the UE sends a RRC message indicating radio link failure in the first component carrier on a second component carrier with an uplink grant to notify the network.

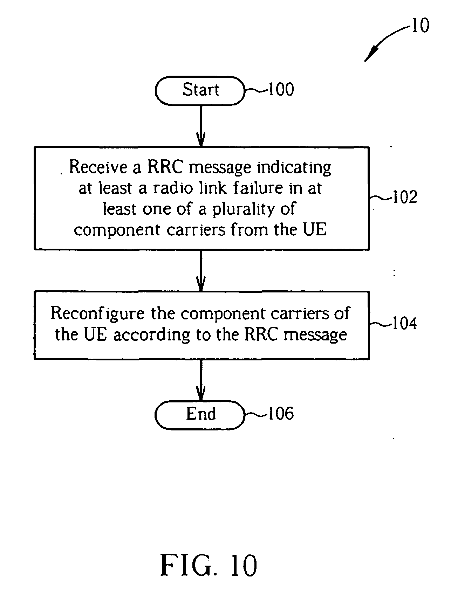

On the other hand, for handling radio link failure with the UE, please refer to Fig. 10 which is a flowchart of a process 10 according to an example. The process 10 is utilized in the network for handling radio link failure associated with the UE. The process 10 can be compiled into the program code 214 and includes the following steps:
Step 100: Start.
Step 102: Receive a RRC message indicating at least a radio link failure in at least one of a plurality of component carriers from the UE.
Step 104: Reconfigure the component carriers of the UE according to the RRC message.
Step 106: End.

According to the process 10, when the network receives the RRC message indicating occurrence of radio link failure of the component carriers, the network reconfigures the component carriers having radio link failure.

For example, as abovementioned, the RRC message indicating radio link failure in the first component carrier is transmitted on the second component carrier. When the network receives the RRC message from the UE, the network reconfigures the first component carrier, and thereby removes a configuration of the first component carrier according to the RRC message.

Please note that, in addition to component carriers, the examples of Figs. 3-10 are also applied for cells used as targets of interest. In addition, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the exemplary methods and means of handling radio link failure for the targets of interest are provided.

## Claims

1. A method of handling radio link failure for a communication device of a wireless communication system, the method comprising:
performing radio problem detection for a plurality of component carriers or cells by a physical layer (302);
starting a timer for detecting, at a radio resource control, RRC, layer,
radio link failure of the plurality of component carriers or cells when radio problems are detected on the plurality of component carriers or cells (304);
wherein said starting step comprises:
starting a first timer for detecting radio link failure of a first
component carrier or cell of the plurality of component carriers or cells when a radio problem is detected on the first component carrier or cell (704); and
starting a second timer for detecting radio link failure of the rest of the plurality of component carriers or cells when radio problems are detected on the rest of the plurality of component carriers or cells (706); and
sending an RRC message indicating at least a radio link failure occurs in at least one of the plurality of component carriers or cells to the network, when the radio link failure is detected on the component carrier or cell, wherein the RRC message is sent on one of the plurality of component carriers excluding the component carriers having the radio link failure.

2. The method of claim 1, **characterized in that** performing the radio problem detection for the plurality of component carriers or cells comprises generating a plurality of consecutive out-of-synchronization indications when the radio problems are detected on the plurality of component carriers or cells.

3. The method of claim 2, **characterized in that** starting the timer for detecting the radio link failure of the plurality of component carriers or cells when radio problems are detected on the plurality of component carriers or cells comprises starting the timer for detecting the radio link failure of the plurality of component carriers or cells according to the plurality of consecutive out-of-synchronization indications.

4. The method of claim 1 further comprising determining the radio link failure of the plurality of component carriers or cells to be detected when the timer expires.

5. The method of claim 4, further comprising performing a radio resource control, RRC, connection re-establishment procedure for re-establishing at least a radio link of the plurality of component carriers or cells.

6. The method of claim 2 further comprising:
generating a plurality of consecutive in-synchronization indications when one of the radio problems is recovered; and
stopping the timer according to the plurality of consecutive in-synchronization indications.

7. A method of claim 1 wherein said starting step comprises:
starting a timer for detecting radio link failure of one of the plurality of component carriers or cells when a radio problem is detected on the component carrier or cell of interest (504).

8. The method of claim 7, **characterized in that** performing the radio problem detection for the plurality of component carriers or cells comprises generating a plurality of consecutive out-of-synchronization indications when the radio problem is detected on the component carrier or cell of interest.

9. The method of claim 8, **characterized in that** starting the timer for detecting the radio link failure of the component carrier or cell when the radio problem is detected on the component carrier or cell comprises starting the timer for detecting the radio link failure of the component carrier or cell of interest according to the plurality of consecutive out-of-synchronization indications.

10. The method of claim 7 further comprising determining the radio link failure of the component carrier or cell to be detected when the timer expires, the method preferably further comprising performing a radio resource control, RRC, connection re-establishment procedure or a random access procedure for re-establishing a radio link of the component carrier or cell.

11. The method of claim 8 further comprising:
generating a plurality of consecutive in-synchronization indications when the radio problem is recovered; and
stopping the timer according to the plurality of consecutive in-synchronization indications.

12. The method of claim 1, **characterized in that** performing the radio problem detection for the plurality of component carriers or cells comprises:
generating a first number of consecutive out-of-synchronization indications when the radio problem is detected on the first component carrier or cell; and
generating a second number of consecutive out-of-synchronization indications when the radio problems are detected on the rest of the plurality of component carriers or cells.

13. The method of claim 12, **characterized in that** starting the first timer for detecting the radio link failure of the first component carrier or cell of the plurality of component carriers or cells when the radio problem is detected on the first component carrier or cell comprises starting the first timer according to the first number of consecutive out of synchronization indications; and starting the second timer for detecting radio link failure of the rest of the plurality of component carriers or cells when radio problems are detected on the rest of the plurality of component carriers or cells comprises starting the second timer according to the second number of consecutive out of synchronization indications.

14. The method of claim 1 further comprising:
determining the radio link failure of the first component carrier or cell to be detected when the first timer expires; and
determining the radio link failure of the rest of the plurality of component carriers or cells to be detected when the second timer expires, the method preferably further comprising performing a radio resource control, RRC, connection re-establishment procedure or a random access procedure for re-establishing a radio link of the first component carrier or cell or for re-establishing at least a radio link of the rest of the component carriers or cells.

15. The method of claim 12 further comprising:
generating a third number of consecutive in-synchronization indications when the radio problem of the first component carrier or cell is recovered before the first timer expires;
generating a fourth number of consecutive in-synchronization indications when one of the radio problems of the rest of the component carriers or cells is recovered before the second timer expires;
stopping the first timer according to the first number of consecutive in-synchronization indications; and
stopping the second timer according to the second number of consecutive in-synchronization indications.

16. A communication device (20) of handling radio link failure detection for a wireless communication system, the communication device (20) comprising:
a computer readable recording medium (210) for storing program code (214) corresponding to a process; and
a processor (200) coupled to the computer readable recording medium (210), for processing the program code (214) to execute the process;
**characterized in that** the process comprises:
the method steps as defined in any one of the preceding claims.

## Patentansprüche

1. Ein Verfahren zur Handhabung von Funkverbindungsfehlern für ein Kommunikationsgerät eines drahtlosen Kommunikationssystems, wobei das Verfahren Folgendes aufweist:
Durchführen von Erkennung von Funkproblemen für eine Vielzahl von Komponententrägern oder Zellen durch eine physikalische Schicht (302);
Starten eines Timers zum Erkennen, in einer Funkressourcensteuerungsschicht, RRC (RRC = radio resouce control), von Funkverbindungsfehlern für die Vielzahl von Komponententrägern oder Zellen, wenn Funkprobleme in der Vielzahl von Komponententrägern oder Zellen erkannt werden (304);
wobei der Schritt des Startens folgendes aufweist:
Starten eines ersten Timers zum Erkennen von Funkverbindungsfehlern für einen ersten Komponententräger oder einer Zelle in der Vielzahl von Komponententrägern oder Zellen, wenn ein Funkproblem in dem ersten Komponententräger oder der ersten Zelle erkannt wird (704); und
Starten eines zweiten Timers zum Erkennen von Funkverbindungsfehlern für den Rest der Vielzahl von Komponententrägern oder Zellen, wenn Funkprobleme in dem Rest der Vielzahl von Komponententrägern oder Zellen erkannt werden (706); und
Senden einer RRC Nachricht an das Netzwerk, die anzeigt, dass ein Funkverbindungsfehler in mindestens einem der Vielzahl von Komponententrägern oder Zellen auftritt, wenn der Funkverbindungsfehler in dem Komponententräger oder der Zelle erkannt wird, wobei die RRC Nachricht über einen der Vielzahl von Komponententrägern gesendet wird, und zwar unter Ausschluss des Komponententrägers, der den Funkverbindungsfehler hat.

2. Verfahren nach Anspruch 1, **dadurch gekennzeichnet, dass** Ausführen der Funkproblemerkennung für die Vielzahl von Komponententrägern oder Zellen Generieren einer Vielzahl von aufeinanderfolgenden Nicht-in-Synchronisationmeldungen aufweist, wenn Funkprobleme in der Vielzahl von Komponententrägern oder Zellen erkannt werden.

3. Verfahren nach Anspruch 2, **dadurch gekennzeichnet, dass** Starten des Timers zum Erkennen des Funkverbindungsfehlers für die Vielzahl von Komponententrägern oder Zellen, und zwar wenn Funkverbindungsprobleme in der Vielzahl von Komponententrägern oder Zellen erkannt werden, Starten des Timers zum Erkennen des Funkverbindungsfehlers für die Vielzahl von Komponententrägern oder Zellen entsprechend der Vielzahl von aufeinanderfolgenden Nicht-in-Synchronisationsmeldungen aufweist.

4. Verfahren nach Anspruch 1, das weiterhin aufweist: Bestimmen, dass der Funkverbindungsfehler für die Vielzahl von Komponententrägern oder Zellen erkannt wird, wenn der Timer abläuft.

5. Verfahren nach Anspruch 4, das weiterhin Durchführen einer Funkressourcensteuerungs-, RRC, Verbindungswiederherstellungsprozedur, auch RRC connection re-establishment procedure, zum Wiederherstellen mindestens einer Funkverbindung für die Vielzahl von Komponententrägern oder Zellen aufweist.

6. Verfahren nach Anspruch 2, das weiterhin Folgendes aufweist:
Generieren einer Vielzahl von aufeinanderfolgenden In-Synchronisationsmeldungen wenn eines der Funkprobleme abgestellt ist; und
Anhalten des Timers entsprechend der Vielzahl von aufeinanderfolgenden In-Synchronisationsmeldungen.

7. Verfahren nach Anspruch 1, wobei der Schritt des Startens folgendes aufweist:
Starten eines Timers zum Erkennen von Funkverbindungsfehlern für einen der Vielzahl von Komponententrägern oder Zellen, wenn ein Funkproblem in dem interessierenden Komponententräger oder der interessierenden Zelle erkannt wird (504).

8. Verfahren nach Anspruch 7, **dadurch gekennzeichnet, dass** Durchführen der Funkproblemerkennung für die Vielzahl von Komponententrägern oder Zellen Generieren einer Vielzahl von aufeinanderfolgenden Nicht-in-Synchronisationsmeldungen, wenn das Funkproblem in dem interessierenden Komponententräger oder der interessierenden Zelle erkannt wird, aufweist.

9. Verfahren nach Anspruch 8, **dadurch gekennzeichnet, dass** Starten des Timers zum Erkennen des Radioverbindungsfehlers für den Komponententräger oder der Zelle, wenn das Funkproblem in dem Komponententräger oder der Zelle erkannt wird, weiterhin Starten des Timers zum Erkennen des Funkverbindungsfehlers für den interessierenden Komponententräger oder der interessierenden Zelle entsprechend der Vielzahl von aufeinanderfolgenden Nicht-in-Synchronisationsmeldungen aufweist.

10. Verfahren nach Anspruch 7, das weiterhin Bestimmen des Radioverbindungsfehlers für den zu erkennenden Komponententräger oder der zu erkennenden Zelle aufweist, wenn der Timer abläuft, wobei das Verfahren weiterhin bevorzugt folgendes aufweist: Durchführen einer Funkressourcensteuerungs-, RRC-, Verbindungswiederherstellungsprozedur, auch RRC Connection Re-establishment Procedure, oder einer Zufallszugriffsprozedur, auch Random Access Procedure, zum Wiederherstellen einer Funkverbindung für den Kompenententräger oder der Zelle.

11. Verfahren nach Anspruch 8, das weiterhin folgendes ausweist:
Generieren einer Vielzahl von aufeinanderfolgenden In-Synchronisationsmeldungen, wenn das Funkproblem abgestellt ist; und
Anhalten des Timers entsprechend der Vielzahl von aufeinanderfolgenden In-Synchronisationsmeldungen.

12. Verfahren nach Anspruch 1, **dadurch gekennzeichnet, dass** Durchführen der Funkproblemerkennung für die Vielzahl von Komponententrägern oder Zellen folgendes aufweist:
Generieren einer ersten Anzahl von aufeinanderfolgenden Nicht-in-Synchronisationsmeldungen, wenn das Funkproblem in dem ersten Komponententräger oder der ersten Zelle erkannt wird; und
Generieren einer zweiten Anzahl von aufeinanderfolgenden Nicht-in-Synchronisationsmeldungen wenn die Funkprobleme in dem Rest der Vielzahl von Komponententrägern oder Zellen erkannt werden.

13. Verfahren nach Anspruch 12, **dadurch gekennzeichnet dass** Starten des ersten Timers zum Erkennen des Funkverbindungsfehlers für den ersten Komponententräger oder der ersten Zelle der Vielzahl von Komponententrägern oder Zellen, wenn das Funkproblem in dem ersten Komponententräger oder der ersten Zelle erkannt wird, folgendes aufweist: Starten des ersten Timers entsprechend der ersten Anzahl von aufeinanderfolgenden Nicht-in-Synchronisationsmeldungen; und Starten des zweiten Timers zum Erkennen von Funkverbindungsfehlern für den Rest der Vielzahl von Komponententrägern oder Zellen, wenn Funkprobleme in dem Rest der Vielzahl von Komponententrägern oder Zellen erkannt werden, folgendes aufweist: Starten des zweiten Timers entsprechend der zweiten Anzahl von aufeinanderfolgenden Nicht-in-Synchronisationsmeldungen.

14. Verfahren nach Anspruch 1, das weiterhin folgendes aufweist:
Bestimmen, dass der Funkverbindungsfehlers für den ersten Komponententräger oder der ersten Zelle erkannt wird, wenn der erste Timer abläuft; und
Bestimmen, dass der Funkverbindungsfehlers für den Rest der Vielzahl von Komponententrägern oder Zellen erkannt wird, wenn der zweite Timer abläuft; wobei das Verfahren weiterhin bevorzugt folgendes aufweist: Durchführen einer Funkressourcensteuerungs-, RRC-, Verbindungswiederherstellungsprozedur, auch RRC connection re-establishment procedure, oder einer Zufallszugriffsprozedur, auch random access procedure, zum Wiederherstellen einer Funkverbindung für den ersten Kompenententräger oder der ersten Zelle oder zum Wiederherstellen mindestens einer Funkverbindung für den Rest der Komponententräger oder Zellen.

15. Verfahren nach Anspruch 12, das weiterhin folgendes aufweist:
Generieren einer dritten Anzahl von aufeinanderfolgenden In-Synchronisationsmeldungen wenn das Funkproblem für den ersten Komponententräger oder der ersten Zelle abgestellt ist, bevor der erste Zähler abläuft;
Generieren einer vierten Anzahl von aufeinanderfolgenden In-Synchronisationsmeldungen wenn eines der Funkprobleme für den Rest der Komponententrägern oder Zellen abgestellt ist, bevor der zweite Zähler abläuft;
Stoppen des ersten Timers entsprechend der ersten Anzahl von aufeinanderfolgenden In-Synchronisationsmeldungen; und
Stoppen des zweiten Timers entsprechend der zweiten Anzahl von aufeinanderfolgenden In-Synchronisationsmeldungen.

16. Ein Kommunikationsgerät (20) zum Handhaben von Funkverbindungsfehlererkennung für ein drahtloses Kommunikationssystem, wobei das Kommunikationsgerät (20) folgendes aufweist:
ein computerlesbares Aufzeichnungsmedium (210) zum Speichern von Programmkode (214) entsprechend einem Prozess; und
einen Prozessor (200), der mit dem computerlesbaren Aufzeichnungsmedium (210) gekoppelt ist, und zwar zum Verarbeiten des Programmkodes (214) um den Prozess auszuführen,
**dadurch gekennzeichnet, dass** der Prozess die Verfahrensschritte nach einem der vorhergehenden Ansprüche aufweist.

## Revendications

1. Procédé pour gérer une défaillance de liaison radio pour un dispositif de communication d'un système de communication sans fil, le procédé comprenant les étapes suivantes :
réaliser une détection de problèmes radio pour une pluralité de porteuses de composantes ou de cellules, par une couche physique (302) ;
démarrer un minuteur pour détecter, au niveau d'une couche de commande de ressources radio, RRC, une défaillance de liaison radio de la pluralité de porteuses de composantes ou de cellules lorsque des problèmes radio sont détectés sur la pluralité de porteuses de composantes ou de cellules (304) ;
dans lequel l'étape de démarrage comprend :
démarrer un premier minuteur pour détecter une défaillance de liaison radio d'une première porteuse de composantes ou cellule de la pluralité de porteuses de composantes ou cellules lorsqu'un problème radio est détecté sur la première porteuse de composantes ou cellule (704) ; et
démarrer un deuxième minuteur pour détecter une défaillance de liaison radio du reste de la pluralité de porteuses de composantes ou cellules lorsque des problèmes radio sont détectés sur le reste de la pluralité de porteuses de composantes ou cellules (706) ; et
envoyer vers le réseau un message RRC indiquant au moins l'occurrence d'une défaillance de liaison radio dans au moins l'une de la pluralité de porteuses de composantes ou cellules, lorsqu'une défaillance de liaison radio est détectée sur la porteuse de composantes ou cellule, le message RRC étant envoyé sur l'une de la pluralité de porteuses de composantes en excluant les porteuses de composantes ayant une défaillance de liaison radio.

2. Procédé selon la revendication 1, **caractérisé en ce que** la réalisation de la détection de problèmes radio pour la pluralité de porteuses de composantes ou cellules comprend la génération d'une pluralité d'indications consécutives d'absence de synchronisation lorsque les problèmes radio sont détectés sur la pluralité de porteuses de composantes ou cellules.

3. Procédé selon la revendication 2, **caractérisé en ce que** le démarrage du minuteur pour détecter la défaillance de liaison radio de la pluralité de porteuses de composantes ou cellules lorsque des problèmes radio sont détectés sur la pluralité de porteuses de composantes ou cellules comprend le démarrage du minuteur pour détecter la défaillance de liaison radio de la pluralité de porteuses de composantes ou cellules conformément à la pluralité d'indications consécutives d'absence de synchronisation.

4. Procédé selon la revendication 1, comprenant en outre la détermination de la défaillance de liaison radio de la pluralité de porteuses de composantes ou cellules à détecter lorsque le minuteur expire.

5. Procédé selon la revendication 4, comprenant en outre la réalisation d'une procédure de rétablissement de connexion de commande de ressources radio, RRC, pour rétablir au moins une liaison radio de la pluralité de porteuses de composantes ou cellules.

6. Procédé selon la revendication 2, comprenant en outre :
générer une pluralité d'indications consécutives de présence de synchronisation lorsque l'un des problèmes radio est résolu ; et
arrêter le minuteur conformément à la pluralité d'indications consécutives de présence de synchronisation.

7. Procédé selon la revendication 1, dans lequel l'étape de démarrage comprend :
démarrer un minuteur pour détecter une défaillance de liaison radio de l'une de la pluralité de porteuses de composantes ou cellules lorsqu'un problème radio est détecté sur la porteuse de composantes ou cellule considérée (504).

8. Procédé selon la revendication 7, **caractérisé en ce que** la réalisation de la détection de problèmes radio pour la pluralité de porteuses de composantes ou cellules comprend la génération d'une pluralité d'indications consécutives d'absence de synchronisation lorsque le problème radio est détecté sur la porteuse de composantes ou cellule considérée.

9. Procédé selon la revendication 8, **caractérisé en ce que** le démarrage du minuteur pour détecter la défaillance de liaison radio de la porteuse de composantes ou cellule lorsque le problème radio est détecté sur la porteuse de composantes ou cellule comprend le démarrage du minuteur pour détecter la défaillance de liaison radio de la porteuse de composantes ou cellule considérée conformément à la pluralité d'indications consécutives d'absence de synchronisation.

10. Procédé selon la revendication 7, comprenant en outre la détermination de la défaillance de liaison radio de la porteuse de composantes ou cellule à détecter lorsque le minuteur expire, le procédé comprenant en outre de préférence la réalisation d'une procédure de rétablissement de connexion de commande de ressources radio, RRC, ou d'une procédure d'accès aléatoire pour rétablir une liaison radio de la porteuse de composantes ou cellule.

11. Procédé selon la revendication 8, comprenant en outre les étapes suivantes :
générer une pluralité d'indications consécutives de présence de synchronisation lorsque le problème radio est résolu ; et
arrêter le minuteur conformément à la pluralité d'indications consécutives de présence de synchronisation.

12. Procédé selon la revendication 1, **caractérisé en ce que** la réalisation de la détection de problèmes radio pour la pluralité de porteuses de composantes ou cellules comprend :
générer un premier nombre d'indications consécutives d'absence de synchronisation lorsque le problème radio est détecté sur la première porteuse de composantes ou cellule ; et
générer un deuxième nombre d'indications consécutives d'absence de synchronisation lorsque les problèmes radio sont détectés sur le reste de la pluralité de porteuses de composantes ou cellules.

13. Procédé selon la revendication 12, **caractérisé en ce que** le démarrage du premier minuteur pour la détection de la défaillance de liaison radio de la première porteuse de composantes ou cellule de la pluralité de porteuses de composantes ou cellules lorsque le problème radio est détecté sur la première porteuse de composantes ou cellule comprend le démarrage du premier minuteur conformément au premier nombre d'indications consécutives d'absence de synchronisation ; et le démarrage du deuxième minuteur pour détecter une défaillance de liaison radio du reste de la pluralité de porteuses de composantes ou cellules lorsque des problèmes radio sont détectés sur le reste de la pluralité de porteuses de composantes ou cellules comprend le démarrage du deuxième minuteur conformément au deuxième nombre d'indications consécutives d'absence de synchronisation.

14. Procédé selon la revendication 1, comprenant en outre :
déterminer la défaillance de liaison radio de la première porteuse de composantes ou cellule à détecter lorsque le premier minuteur expire ; et
déterminer la défaillance de liaison radio du reste de la pluralité de porteuses de composantes ou cellules à détecter lorsque le deuxième minuteur expire, le procédé comprenant en outre de préférence la réalisation d'une procédure de rétablissement de connexion de commande de ressources radio, RRC, ou d'une procédure d'accès aléatoire pour rétablir une liaison radio de la première porteuse de composantes ou cellule ou pour rétablir au moins une liaison radio du reste des porteuses de composantes ou cellules.

15. Procédé selon la revendication 12, comprenant en outre :
générer un troisième nombre d'indications consécutives de présence de synchronisation lorsque le problème radio de la première porteuse de composantes ou cellule est résolu avant que le premier minuteur expire ;
générer un quatrième nombre d'indications consécutives de présence de synchronisation lorsque l'un des problèmes radio du reste des porteuses de composantes ou cellules est résolu avant que le deuxième minuteur expire ;
arrêter le premier minuteur conformément au premier nombre d'indications consécutives de présence de synchronisation ; et
arrêter le deuxième minuteur conformément au deuxième nombre d'indications consécutives de présence de synchronisation.

16. Dispositif de communication (20) pour gérer une détection de défaillance de liaison radio pour un système de communication sans fil, le dispositif de communication (20) comprenant :
un support d'enregistrement lisible par un ordinateur (210) pour mémoriser du code de programme (214) correspondant à un processus ; et
un processeur (200) couplé au support d'enregistrement lisible par un ordinateur (210), pour traiter le code de programme (214) pour exécuter le processus ;
**caractérisé en ce que** le processus comprend :
les étapes de procédé telles que définies dans l'une quelconque des revendications précédentes.
